(19) **Europäisches Patentamt / European Patent Office / Office européen des brevets**

(11) **EP 1 977 886 A1**

(12) **EUROPEAN PATENT APPLICATION**

(43) Date of publication:
**08.10.2008 Bulletin 2008/41**

(51) Int Cl.:
*B32B 17/10* $^{(2006.01)}$     *C03C 27/12* $^{(2006.01)}$
*C08K 3/36* $^{(2006.01)}$     *C08L 29/14* $^{(2006.01)}$
*C09C 1/30* $^{(2006.01)}$

(21) Application number: **07105694.9**

(22) Date of filing: **05.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
• **Kuraray Europe GmbH**
  **65926 Frankfurt am Main (DE)**
• **Kuraray Co., Ltd.**
  **Kurashiki-shi, Okayama 710-8622 (JP)**

(72) Inventors:
• **Wakui, Takashi**
  **Kurashiki-shi 710-8691 (JP)**

• **Moriguchi, Nobuhiro**
  **Kurashiki-shi Okayama 710-8691 (JP)**
• **Keller, Uwe, Dr.**
  **53177, Bonn (DE)**
• **Steuer, Martin**
  **65835, Liederbach (DE)**

(74) Representative: **Kisters, Michael Marcus**
  **Kuraray Europe GmbH**
  **Patents and Trademarks**
  **Mülheimer Strasse 26**
  **53840 Troisdorf (DE)**

(54) **Interlayer films for laminated glazing containing modified silica**

(57)    The present invention relates to interlayer film useful for laminated glass comprising polyvinyl acetal (A), at least one plasticizer (B), silica (C) and at least one basic compound (D), wherein the silica (C) is modified with organic silane residues and weight ratio is C/(A+B) of 2,5/100 to 60/100.

**EP 1 977 886 A1**

## Description

The present invention relates to an interlayer film containing modified or hydrophobized silica to provide such film with improved mechanical properties at low haze.

## Technical Field

Interlayer films for laminated glazing are long known in the art and mostly produced from plasticized polyvinyl butyral by an extrusion process. Nearly all windshields for cars or airplanes are produced from laminated glazing; in addition laminated glazing is often used as safety glazing for architectural applications.

The addition of silica to interlayer film has been proposed to enhance the adhesion of the film to the glass and to control the moisture sensitivity of the film.

## Prior Art

US 2,467,342 describes the addition of colloidal silica in polyvinyl acetal resins to cast films. The colloidal silica disclosed in this publication must be in sol form in order to produce a clear film without haze. Casting processes are not applicable for the industrial production of polyvinyl acetal films.

EP 0 227 633 discloses the use of silica as nucleating agent in interlayer films for fire resistant laminated glazing. This interlayer film comprises a plasticizer, an organic phosphate as char-forming component and silica as nucleating agent. In order to prevent undesirable haze of the interlayer film due to the addition of silica, only silica having a refractive index within $\pm$ 0,03 of the plasticized formulation can be used. The use of modified or hydrophobized silica is not disclosed.

EP 1 042 121 discloses the use of small amounts of fumed silica in polyvinyl butyral films to enhance the adhesion between the interlayer film and glass. In order to maintain the haze of the interlayer film in an acceptable range, only 0,001 to 0,25 % by weight of silica is added to the plasticized polyvinyl butyral. By adding such small amounts of silica, no effect on the mechanical properties such as the tensile strength of the interlayer film can be detected. Furthermore, this publication does not describe the use of modified or hydrophobized silica.

JP 11-060290 discloses the addition of silica and other metal oxides to polyvinyl acetal in combination with the metal salt of a carboxylic acid with 5 to 25 carbon atoms. In this publication, an upper limit of 0,5 % by weight of silica is proposed in order to increase the adhesive strength of an interlayer film to glass and at the same time maintain an acceptable haze value. The effect of silica on the tensile strength of the interlayer film is not mentioned in this publication. If used in the disclosed amounts, silica has practically no effect on the mechanical properties of the interlayer film. The use of modified or hydrophobized silica is not disclosed.

Most of the published literature addresses the problem that by adding silica to plasticized polyvinyl acetals, the resulting interlayer films will obtain an unacceptable haze value for optical applications. Whether this unwanted haze value is due to the silica particles themselves or due to higher moisture sensitivity remains unclear.

So far, only small amounts of silica have been used to increase the adhesion between glass and interlayer film if at the same time an opaque appearance of the interlayer film has to be avoided. Furthermore, if silica is used in higher amounts than those described by the above-mentioned publications, not only unacceptable haze values but also discoloration of the film may result due to the acid properties of the silica. Acidic conditions will lead to partial degradation of the acid sensitive PVB-polymer at the high temperatures used for PVB-film extrusion.

Since plasticized polyvinyl butyral is a rather polar composition, only hydrophiclic silica i.e. unmodified silica has been used so far.

Surprisingly it was found that the addition of modified i.e. hydrophobized silica to plasticized polyvinyl acetal, interlayer films with improved mechanical properties such as the tensile strength and acceptable haze value can be obtained.

## Disclosure of the invention

The object of the invention is accomplished by providing an Interlayer film useful for laminated glass comprising polyvinyl acetal (A), at least one plasticizer (B) and silica (C) characterized in that the silica (C) is modified with organic silane residues and a weight ratio of C/(A+B) of 2,5/100 to 60/100.

The silica used in the present invention may by precipitated or fumed silica. The silica is preferably modified on the surface only, but also bulk-modified silica can be used. Odified silica is commercially available for example under the trademark Aerosil with grades R972, R974, R976, R976S, R805 from Degussa GmbH, Germany or under the trademark Nipgel AY-200 from Toso-Silica, Japan.

The silica (C) can be modified with at least one organic silane residue of formula I

$$-(O)_{4-n}SiR_n \qquad I$$

wherein n is an integer of 1 to 3 and

R is a branched or unbranched alkyl, alkyl aryl or aryl group containing 1 to 15 carbon atoms.

At least one organic silane residue may be selected from the group dimethylsilane, trimethylsilane, hexamethylene disilane and octylsilane. Furthermore, silicone oil such as dimethylsilicone oil has been useful as modification agent for the silica used in the present invention.

The haze value of the interlayer film according to the invention can be improved by adding silica which has a similar refractive index as the plasticized polyvinyl acetal composition. The refractive index of plasticized polyvinyl acetal (A+B) is usually in the range of 1.470 to 1.490 at 20 °C when non-aromatic plasticizers are used. In order to achieve good transparency, the use of silica (C) with a difference of refractive index of 0.015 or less, preferably of 0,0001 to 0,015 to the refractive index of the plasticized polyvinyl acetal (A+B) is preferred. More preferably, the upper limit of the difference of refractive index is 0,01, and the lower limit of the difference of refractive index is 0,001.

The polyvinyl acetal (A) used in the present invention is produced by reacting polyvinyl alcohol with at least one aldehyde. Preferred aldehydes for this reaction are formaldehyde, acetaldehyde, propionaldehyde and butyraldehyde.

Most preferably, polyvinyl butyral (PVB) is used as polyvinyl acetal. Polyvinyl butyral is a terpolymer with acetate, hydroxyl and acetal units. Preferably, the polyvinyl butyral used in the present invention comprises 0 to 2 % by weight acetate units, 15 to 25 % by weight hydroxyl units and 85 to 76 % by weight butyral units.

Furthermore, partly cross-linked PVB, obtainable by reaction of polyvinyl alcohol with a mixture of at least one aldehyde and at least one dialdehyde and/or aldehyde containing carboxylic groups according DE 10 143 109 or WO 02/40578 A1, can be used.

The Interlayer film according to the invention may contain at least a basic compound (D). As basic compound (D), metal salts of organic carboxylic acids comprising 1 to 15 carbon atoms are preferred. Especially useful are alkali or earth alkali salts of acetic acid like sodium acetate, magnesium acetate or potassium acetate. It is also possible to add inorganic compounds like sodium hydroxide or potassium hydroxide, but since excess amounts of such strong bases may lead to chemical degradation of the polyvinyl acetal or plasticizer, the use of inorganic compounds is less preferred. The basic compound (D) is usually employed in an amount of 0,005 to 2 % by weight, preferably 0,05 to 1 % by weight, calculated on the mixture (A+B).

Commercially available PVB-resin for PVB-film production is often stabilized against acidic degradation with small amounts of a base such as sodium or potassium hydroxide. Extruded PVB-film from such resin has therefore a certain alkalinity, measurable as alkaline titer. The addition of modified silica can neutralize a certain amount of the base contained in the resin which may result in alkaline titers below 3 or even acid titer. By the usual titration method, however, acid titer will result in a measured alkaline titer of "0", since negative values are not included in the range of the alkaline titer method as described in the examples. To prevent unwanted coloration of the film, interlayer films according to the invention show preferable alkaline titer of more than 3, preferably more than 10 and more preferably more than 20 or 30. The upper limit of the alkaline titer value is not of particular importance, but should not exceed 100.

The modified silica (C) can be used in an amount of 2,5 to 60, preferably 7,5 to 40, more preferably 7,5 to 25 and most preferably 10 to 15 parts per 100 parts per weight of the mixture (A+B). The silica may further be doped by one or more compounds selected from the group consisting of $Al_2O_3$, $TiO_2$, $ZrO_2$ and MgO, and can comprise 0,1 to 20 % by weight (calculated on the silica) of at least one of these metal oxides. Aerosil MOX-170 and MOX-80 from Degussa GmbH are suitable silica for this purpose.

The silica used in the present invention can further be characterized by its surface properties and the particle size. The preferred fumed silica used in the present intention has BET-surface area of 50 to 300 $m^2$/g and/or a primary particle size of 7 to 30 mm.

The haze value of the plasticized film according to the invention should be in the range of that of commercial available interlayer film. Interlayer films according to the invention show preferable haze values of 0,01 to 5,0 %, preferably 0,01 to 4,0 % and most preferably 0,01 to 2,0 %. These values are measured according to ASTM D 1003/JIS K7105 at an interlayer film having a thickness of 0.76 mm. If the interlayer film is thinner or thicker, haze values have to be calculated to match a thickness of a film of 0.76 mm.

In addition to the mentioned haze values, interlayer films according to the invention show a preferable Yellowness delta b Index of 5 or less (0 to 5), preferably 0,01 to 3, more preferably 0,01 to 1 and most preferably 0,01 to 0,5. The Yellowness delta b Index is measured as described in the examples at an interlayer film having a thickness of 0,76 mm. If the interlayer film in thinner or thicker, the Yellowness delta b Index has to be calculated to match a thickness of a film of 0,76 mm.

The interlayer film of the present invention may comprise 20 to 100 parts, preferably 30 to 80 parts plasticizer (B) per 100 parts polyvinyl acetal. Any plasticizer generally used for the production of interlayer films from polyvinyl acetales can be employed in the present invention. Especially useful are triethylenglycol-di-2-ethylbutyrate (3GH), triethylene glycol-heptanoate (3G7) or triethylene glycol-di-2-ethylhexanoate (3G8) as well as the corresponding tetraethyleneglycol and oligoethylene glycol derivatives and esters with carboxylic acids containing 8 to 12 carbon atoms. Furthermore, dihexyladipate (DHA), dioctyladipate (DOP), dibutylsebacate (DBS) and dialkylphtalates can be used. All plasticizers can be used alone or in any mixture thereof.

The use of plasticizer mixtures of a "standard" plasticizer like the above-mentioned compounds and a co-plasticizer is also possible. Such mixtures are disclosed in DE 102004043907 A1 and comprise at least one of the above-mentioned "Standard" plasticizers and 1 to 99 % by weight, preferably 1 to 50 % by weight or 1 to 10 % by weight (calculated on the plasticizer mixture) of at least one co-plasticizer having the chemical formula I or II

$$R1-O(-R2-O)_n-CO-R5 \qquad I$$

$$R1-O(-R2-O)_n-CO-R3-CO-(O-R4-)_m-O-R6 \qquad II$$

With R1,R5,R6: independently H, aliphatic or aromatic residue with 1 to 12 carbon atoms,
R3: direct bond, bivalent aliphatic or aromatic residue with 1 to 12 carbon atoms,
R2, R4: independently H, aliphatic or aromatic residue with 1 to 12 carbon atoms,
n, m: independently integer of 1 to 10, preferably 1 to 5.

R2 and R4 can represent units of ethylene, propylene or butylene groups, i.e. the compound may contain groups derived from ethylene oxide, propylene oxide or butylene oxide and/or oligomers thereof.

R1, R5 und R6 are preferably methyl-, ethyl-, propyl-, butyl- or hexyl groups.

The carboxylic acids of the ester according to formula I are in general carboxylic acids comprising 1 to 18 carbon atoms, especially benzoic acid, cyclohexanecarboxylic acid, acetic acid or propionic acid are preferred. As carboxylic acids of the ester according to formula II, the following dicarboxylic acids are preferred: oxalic acid, malonic acid, glutaric acid, succinic acid, adipic acid, pimelin acid, azelaic acid, sebacic acid, terephthalic acid, phthalic acid, isophthalic acid and all stereo isomers of cyclohexandicarboxylic acid.

Namely, di-(2-butoxyethyl)-adipate (DBEA), Di-(2-butoxyethyl)-sebacate (DBES), di-(2-butoxyethyl)-acetate, di-(2-butoxyethyl)-glutarate, di-(2-butoxyethoxyethyl)-adipate (DBEEA), di-(2-butoxyethoxyethyl)-sebacate (DBEES), di-(2-butoxyethoxyethyl)-acetate, di-(2-butoxyethoxyethyl)-glutarate, di-(2-hexoxyethyl)-adipate, di-(2-hexoxyethyl)-sebacate, di-(2-hexoxyethyl)-acetate, di-(2-hexoxyethyl)-glutarate, di-(2-hexoxyethoxyethyl)-adipate, di-(2-hexoxyethoxyethyl)-sebacate, di-(2-hexoxyethoxyethyl)-acetate, di-(2-hexoxyethoxyethyl)-glutarate, di-(2-butoxyethyl)-phthalate and/or di-(2-butoxyethoxyethyl)-phthalate can be used as co-plasticizer.

It is also possible to use the co-plasticizer according formula I or II as single plasticizer in pure form (100%) without any additional plasticizer.

The compositions of interlayer films of the present invention can further contain the usual additives known to the skilled person, such as small amounts of water, UV-absorbing compounds (for example benzotriazoles such as Tinuvin 328, 326, P, 327), antioxidant such as phenolic, adhesion control agents (ACA), optical brightener, stabilizer such as HALS, dyes and/or pigments.

The mechanical properties of the interlayer film according to the invention are enhanced compared with an interlayer film of identical composition, but without silica. In terms of "tensile stress at 50% of elongation" and/or "tensile stress at 100% of elongation", the stress of an interlayer film according to the invention can be at least 1,2 times, preferably 1,2 to 30,0 times, more preferably 1,2 to 20,0 times and most preferably of 1,2 to 10,0 times that of an interlayer film with the same composition without modified silica (C).

The mechanical properties of interlayer films based on polyvinyl acetal vary with temperature and are usually adjusted by choice of the chemical composition and the amount of the resin and the plasticizer to cope with the usual environmental conditions. The glass transition temperature Tg of the interlayer film is therefore of particular importance.

The difference between the glass transition temperature of the interlayer film according to the invention, Tga, and the glass transition temperature of an interlayer film with the same composition, but without modified silica (C), Tgb, should be within 3 degrees Celsius. ($|Tga-Tgb| <= 3$)

Especially preferred are interlayer films for laminated glass wherein:

(a) the tensile stress at "tensile stress at 50% of elongation and/or 100% of elongation" of said interlayer film is at least 1.20 times of an interlayer film without silica (C) and

(b) the difference between the glass transition temperature of said interlayer film, Tga, and the glass transition temperature of an interlayer film with the same composition, but without silica (C), Tgb, is within 3 degrees Celsius. ($|Tga-Tgb| <= 3$).

The interlayer film according to the invention can be produced by feeding the silica and the polyvinyl acetal simultaneously and the plasticizer charged with additives and the basic compound separately to an extruder to form a plasticized molten mixture that is extruded from a slit die. It is also possible to first mix the polymer and the plasticizer and add silica and the basic compound to this mixture. Also addition of the silica to the molten mixture containing the basic compound by means of a side feeder attached to the extruder is possible. The extrusion process itself is well known in the art and disclosed for example in EP 0 185 863 B1, WO 03/097347 A1 or WO 01/43963 A1.

The silica used in the interlayer films according to the invention influences the adhesion between the interlayer film and glass surface. The adhesion of interlayer films is - regardless of the application - carefully adjusted to a compromise of penetration resistance and bonding to the glass panes. The influence of silica can be levelled by adjusting the amount of adhesion control agents. As adhesion control agents, the same compounds as the basic compounds (D) may be used, i.e. alkali and/or earth alkali metal salts of organic carboxylic acids comprising 1 to 15 carbon atoms are preferred. Especially useful are sodium acetate, magnesium acetate or potassium acetate. Adhesion control agents may be used in 0.0001 to 0.01 wght%, based on the total mixture.

A different approach of adjusting the adhesion of interlayer film to glass would be to avoid the contact between silica-containing films and glass on at least one side of the film.

Another object of the invention are multilayer films useful for laminated glass A comprising at least one film or layer comprising polyvinyl acetal (A') and at least one plasticizer (B') and at least one film or layer comprising polyvinyl acetal (A), at least one plasticizer (B) and silica (C) wherein the silica (C) is modified with organic silane residues and the weight ratio of C/(A+B) is 2,5/100 to 60/100

All features already discussed for silica-containing film as monolayer could apply to the silica-containing film in the multilayer film.

The polyvinyl acetal (A') and (A) and the plasticizer (B') and (B) may be the same or different in regard of amount used or chemical composition. Preferred is the use of the same materials in an identical amount.

The film comprising polyvinyl acetal (A') and at least one plasticizer (B') may contain the usual additives known to the skilled person, such as small amounts of water, UV-absorbing compounds (for example benzotriazoles such as Tinuvin 328, 326, P, 327), antioxidant such as phenolic, adhesion control agents (ACA), optical brightener, stabilizer such as HALS, dyes and/or pigments.

The multilayer film may consist of one film or layer containing silica and one film or layer without silica. In another embodiment of the invention, at least one (preferred: one) silica-containing film or layer is sandwiched between at least two (preferred: two) "standard" films or layers without silica. The surface of such multilayer film has the properties of a "standard" film without silica, but the mechanical properties such as tensile strength of the overall multilayer film are improved by the silica-containing film or layer.

The silica-containing core film or layer of the multilayer film can be produced as already described. The multilayer film according to this invention can be produced by mechanical combination of the films, but may also be produced by coextrusion of the layers.

The multilayer film may have a thickness of multiples of 0,38 mm as usual in production of laminated glazing. Therefore the film containing silica can be as thin as 0.1 mm and as thick as needed to achieve the desired mechanical properties.

The interlayer and multilayer films according to the invention can be used for the production of laminated glazing, especially in windshields of cars, busses and aircrafts, for buildings and in sound-absorbing walls.

**Examples**

1) Measurements

*Alkaline titer*

3 - 4 g of PVB-film is dissolved in 100 ml mixture of ethyl alcohol/THF (80:20) on a magnetic stirrer over night. 10 ml of diluted hydrochloric acid (c = 0,01 mol/l) are added. Excess hydrochloric acid is potentiometrically titrated with a solution of tetrabutylammonium hydroxide in 2-propanol (TBAH, c = 0,01 mol/1) using a titroprocessor (e.g. by Metrohm) against a blank sample. Alkaline titer is calculated as:

```
ml (0,01 mol/l HCl) per 100g of sample = (ml TBAH_blank - ml
TBAH_sample) x 100 / sample weight in g.
```

*Tensile properties* were determined according to DIN EN ISO 527-1 and DIN EN ISO 527-3, on strip specimens of the dimension 15 mm x 120 mm using an increased elongation rate of 200 mm/min.

*Yellowness delta b Index* of the film was determined measuring a laminate of the film between two plies of 2 mm standard float glass against a reference glass pair on an optical photometer Hunterlab "Colorquest XE" in the L,a, b-system: b value (laminate) - b value (glass pair) = delta b.

*Haze* of the film was measured according to ASTM 1003 at 20°C on a Hunterlab "Colorquest XE" in laminated form i.e. laminated between two plies of 2 mm clear float glass without haze.

*Method for measurement of refractive index of silica*

The silica is dried for 2 hours at 105°C in an oven. A suspension containing 2% of the dried fumed silica in a suitable nonpolar solvent is filled in a sealed vial that is stored for 4 hours at 80°C. During that time the vial is occasionally agitated in order to achieve good homogenization. This suspension is transferred into a cuvette for optical measurement and the light transmission at 550 nm is recorded as a function of sample temperature. The temperature for which the light transmission passes through its maximum (minimum haze) is taken and the refractive index of the solvent alone measured on a digital refractometer (such as ABBEMAT-WR of Kernchen GmbH) at the same temperature is set equal to the refractive index of the fumed silica. Suitable solvents are e.g. limonene, plasticizers such as Palatinol 10-P, 3G8 or other and are selected according to the expected refractive index of the silica.

*Measurement of refractive index of PVB-film*

A circular sample of PVB-film with flat surface is measured in the sample mould of a high accuracy automatic refractometer such as "ABBEMAT-WR" of Kernchen GmbH at 20 °C.

*Glass transition temperature Tg*

Glass transition temperature is understood as the maximum of the loss factor (tan $\delta$) curve as measured by dynamic mechanical thermal analysis (DMTA) on a film sample at 1Hz with an amplitude of 0,05% and at a heating rate of 2K/min.

2a) Preparation of interlayer film

PVB-films of the examples according to the invention and the comparative examples were prepared under identical conditions by an extrusion process with a melt temperature close to 200 °C, forcing the melt through a slit die. PVB polymer and optionally fumed silica were simultaneously fed into the hopper, whereas the plasticizer containing UV-absorber in dissolved form is added as a separate liquid component. The basic compound was fed into the extruder via a separate inlet as an aqueous solution. Film thickness was 0,76 mm in all examples/comparative examples.

2b) Preparation of interlayer film (multilayer)

Multilayer films were prepared by sandwiching one (core) layer according to example W10 with a thickness of 0.38 mm between two layers according to comparative example C9 with a thickness of 0.20 mm. The resulting multilayer film had a thickness of 0.78 mm and was tested for its optical and mechanical properties in the same way as the monolayer films.

3) Materials

Silica: Commercial grade AEROSIL® R972, R974, RX200 and R805 of DEGUSSA are used for preparation of the silica-containing film. Commercial grade NIPGEL® AY-200 of TOSO-Silica is used for comparison.

Table-1

| Silica | Aerosil R972 | Aerosil R974 | Aerosil RX200 | Aerosil R805 | Nipgel AY-200 |
|---|---|---|---|---|---|
| Specific surface area (BET) | 130 | 200 | 200 | 200 | 300 |
| Primary particle size (nanometer) | 16 | 12 | 12 | 12 | 10 |
| pH value | 4,0 | 3,8 | 5,5 | 3,5 | 7,0 |

(continued)

| Silica | Aerosil R972 | Aerosil R974 | Aerosil RX200 | Aerosil R805 | Nipgel AY-200 |
|---|---|---|---|---|---|
| Materilal for modification | DDS | DDS | HMDS | Octyl silane | - |

PVB resin:      Mowital B 68/2 SF with 20.5 weight% PVOH from Kuraray Europe GmbH
Plasticizer:      3G8 (Triethylenglycol-di-2-ethylhexanoate)
Basic compound:      Potassium acetate and magnesium acetate (tetrahydrates)

Table-2    [Monolayer: Single plasticizer]
Table-3    [Monolayer: Two plasticizers]
Table-4    [Monolayer: Two plasticizers]

4) Results

As can be seen from the following Table 2 through 4, interlayer films according to the invention show improved tensile stress and acceptable values for haze and yellowness.

Table- 2

| | Example | C1 | W1 | W2 | W3 | C2 | C3 | C4 |
|---|---|---|---|---|---|---|---|---|
| Composition[5] | (A) Polyvinyl acetal[1] (weight-%) | PVB (72) | PVB (72) | PVB (72) | PVB (72) | PVB (72) | PVB (72) | PVB (72) |
| | (B) Plasticizer[2] (weight-%) | 3G8 (28) | 3G8 (28) | 3G8 (28) | 3G8 (28) | 3G8 (28) | 3G8 (28) | 3G8 (28) |
| | (C) Silica[3] (weight-%) | – | R972 (3.6) | R972 (14) | R972 (40) | R972 (3.6) | R972 (0.7) | AY-200 (3.6) |
| | (D) Basic compound[4] (weight-%) | K (0.025) Mg (0.05) | K (0.025) Mg (0.05) | K (0.025) Mg (0.05) | K (0.025) Mg (0.05) | – | K (0.025) Mg (0.05) | K (0.025) Mg (0.05) |
| Properties of film | Haze [%] | 0,9 | 1,6 | 1,8 | 2,3 | 6,1 | 1,2 | 11,2 |
| | Yellowness delta b | 0,2 | 0,2 | 0,2 | 0,2 | 5,1 | 0,2 | 0,2 |
| | Tg [deg-C] | 38 | 38 | 38 | 38 | 38 | 38 | 38 |
| | Tensile stress at 50% of elongation [MPa] (ratio to C1) | 3.8 (1.0) | 4.9 (1.3) | 9.6 (2.5) | 28 (7.4) | – | 4.1 (1.1) | 6.0 (1.6) |
| | Tensile stress at 100% of elongation [MPa] (ratio to C1) | 10.5 (1.0) | 13.9 (1.3) | 19.6 (1.9) | – | – | 10.9 (1.0) | 16.0 (1.5) |
| | Elongation at break [%] | 202 | 176 | 139 | 58 | – | 195 | 171 |
| | Alkaline titer | 50 | 46 | 35 | 5 | 0 | 49 | 51 |

1) PVB: Mowital B 68/2 SF (Kuraray Europe GmbH), 2) 3G8: Triethylenglycol-di-2-ethylhexanoate, 3) K: Potassium acetate, Mg: Magnesium acetate tetrahydrate, 4) Weight-% is based on plasticized acetal (A+B)

Table-3

| | Example | C5 | W5 | W6 | W7 | W8 | C6 |
|---|---|---|---|---|---|---|---|
| Composition[6] | (A) Polyvinyl acetal[1] (weight-%) | PVB (65) | PVB (65) | PVB (65) | PVB (65) | PVB (65) | PVB (65) |
| | (B) Plasticizer[2] (weight-%) | 3G8:DBEA[1:1] (35) | 3G8:DBEA[1:1] (35) | 3G8:DBEA[1:1] (35) | 3G8:DBEA[1:1] (35) | 3G8:DBEA[1:1] (35) | 3G8:DBEA[1:1] (35) |
| | (C) Silica[3] (weight-%) | − | R972 (6.4) | R974 (6.4) | RX200 (6.4) | R805 (6.4) | R972 (6.4) |
| | (D) Basic compound[4] (weight-%) | K (0.025) Mg (0.05) | K (0.025) Mg (0.05) | K (0.025) Mg (0.05) | K (0.025) Mg (0.05) | K (0.025) Mg (0.05) | − |
| | UV-absorber[5] (weight-%) | Tinuvin 328 (0.15) | Tinuvin 328 (0.15) | Tinuvin 328 (0.15) | Tinuvin 328 (0.15) | Tinuvin 328 (0.15) | Tinuvin 328 (0.15) |
| Properties of film | Haze [%] | 0,4 | 2,4 | 4,7 | 1,9 | 4,8 | 5,5 |
| | Yellowness delta b | 0,2 | 0,3 | 0,2 | 0,5 | 0,4 | 5,3 |
| | Tg [deg-C] | 28 | 29 | 29 | 29 | 29 | − |
| | Tensile stress at50% of elongation [MPa] (ratio to C5) | 0.6 (1.0) | 0.8 (1.3) | 0.8 (1.3) | 0.8 (1.3) | 0.7 (1.3) | − |
| | Tensile stress at 100% of elongation [MPa] (ratio to C5) | 1.1 (1.0) | 1.8 (1.6) | 1.7 (1.5) | 1.9 (1.7) | 1.6 (1.5) | − |
| | Elongation at break [%] | 346 | 309 | 351 | 362 | 355 | − |
| | Alkaline titer | 41 | 36 | 34 | 38 | 33 | 0 |

1) PVB: Mowital B 68/2 SF (Kuraray Europe GmbH), 2) 3G8: Triethylenglycol-di-2-ethylhexanoate, DEBA: Di-(2-buthoxyethyl)-adipate, 3) K: Potassium acetate, Mg: Magnesium acetate tetrahydrate, 4) Benzotriazole Tinuvin 328 (Ciba), 5) Weight-% is based on plasticized acetal (A+B)

EP 1 977 886 A1

Table-4

| | Example | C7 | W9 | W10 | W11 | C8 |
|---|---|---|---|---|---|---|
| Composition[6] | (A) Polyvinyl acetal[1] (weight-%) | PVB (66) | PVB (66) | PVB (66) | PVB (66) | PVB (66) |
| | (B) Plasticizer[2] (weight-%) | 3G8:DBEA[1:1] (34) | 3G8:DBEA[1:1] (34) | 3G8:DBEA[1:1] (34) | 3G8:DBEA[1:1] (34) | 3G8:DBEA[1:1] (34) |
| | (C) Silica[3] (weight-%) | – | R972 (6.6) | R974 (6.6) | RX200 (6.6) | AY-200 (6.6) |
| | (D) Basic compound[4] (weight-%) | K (0.025) Mg (0.05) | K (0.025) Mg (0.05) | K (0.025) Mg (0.05) | K (0.025) Mg (0.05) | K (0.025) Mg (0.05) |
| Properties of film | Haze [%] | 1,2 | 1,4 | 3,7 | 1,6 | 19,7 |
| | Yellowness delta b | 0,2 | 0,2 | 0,2 | 0,2 | 0,2 |
| | Tg [deg-C] | 32 | 32 | 32 | 32 | 32 |
| | Tensile stress at 50% of elongation [MPa] (ratio to C7) | 1.6 (1.0) | 2.1 (1.3) | 2.4 (1.5) | 2.1 (1.3) | 2.9 (1.8) |
| | Tensile stress at 100% of elongation [MPa] (ratio to C7) | 4.1 (1.0) | 6.4 (1.6) | 6.8 (1.7) | 5.7 (1.4) | 8.7 (2.1) |
| | Elongation at break [%] | 263 | 234 | 231 | 232 | 204 |
| | Alkaline titer | 43 | 38 | 36 | 37 | 43 |

1) PVB: Mowital B 68/2 SF (Kuraray Europe GmbH), 2) 3G8: Triethylenglycol-di-2-ethylhexanoate, DEBA: Di-(2-buthoxyethyl)-adipate, 3) K: Potassium acetate, Mg: Magnesium acetate tetrahydrate, 4) Weight-% is based on plasticized acetal (A+B)

EP 1 977 886 A1

**Claims**

1. Interlayer film useful for laminated glass comprising polyvinyl acetal (A), at least one plasticizer (B), silica (C) and at least one basic compound (D), wherein the silica (C) is modified with organic silane residues and the weight ratio of C/(A+B) is 2,5/100 to 60/100.

2. Interlayer film according to Claim 1, wherein the silica (C) is modified with at least one organic silane residue of formula I

$$-(O)_{4-n}SiR_n \qquad\qquad I$$

   wherein n is an integer of 1 to 3 and
   R is a branched or unbranched alkyl, alkyl aryl or aryl group containing 1 to 15 carbon atoms.

3. Interlayer film according to Claim 1, wherein the silica (C) is modified with at least one silicone oil.

4. Interlayer film according to any of Claims 1 through 3, wherein the basic compound (D) is a metal salt of organic carbon acids comprising 1 to 15 carbon atoms.

5. Interlayer film according to any of Claims 1 through 4, wherein the film has an alkaline titer of more than 3.

6. Interlayer film according to any of Claims 1 through 5, wherein the film in 0,76 mm thickness has a haze value of less than 5.0 % according to ASTM D 1003.

7. Interlayer film according to any of Claims 1 through 6, wherein the refractive index between silica (C) and plasticized polyvinyl acetal (A+B) is 0.015 or less.

8. Interlayer film according to any of Claims 1 through 7, wherein the modified silica (C) is doped by one or more members selected from the group consisting of A1203, TiO2, MgO and ZrO2.

9. Interlayer film according to any of the Claims 1 through 8, wherein the tensile stress at 50% of elongation and/or the tensile stress at 100% of elongation of said interlayer film is at least 1.2 times of that of an interlayer film with the same composition without modified silica (C).

10. Interlayer film according to any of the Claims 1 through 9, wherein the difference between the glass transition temperature of said interlayer film, Tga, and the glass transition temperature of an interlayer film with the same composition without modified silica (C), Tgb, is within 3 degrees Celsius. (|Tga-Tgb| <= 3)

11. Interlayer film according to any of the Claims 1 through 10, wherein;

   a) the tensile stress at 100% of elongation of the said interlayer film is at least 1.2 times of as that of an interlayer film with the same composition without fumed silica (C); and
   b) the difference between the glass transition temperature of said interlayer film, Tga, and the glass transition temperature of an interlayer film with the same composition without fumed silica (C), Tgb, is within 3 degrees Celsius. (|Tga-Tgb| <= 3).

12. Multilayer film useful for laminated glass A comprising at least one film or layer comprising polyvinyl acetal (A') and at least one plasticizer (B') and at least one film or layer comprising polyvinyl acetal (A), at least one plasticizer (B) and silica (C) wherein the silica (C) is modified with organic silane residues and the weight ratio of C/(A+B) is 2,5/100 to 60/100

13. Use of the interlayer film according to any of the Claims 1 through 12 or the multilayer film according to claim 12 in glazing, especially windshields of cars, busses, aircrafts, buildings and in sound-absorbing walls.

**European Patent Office**

## EUROPEAN SEARCH REPORT

Application Number

EP 07 10 5694

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | EP 0 227 633 A2 (MONSANTO CO [US]) 1 July 1987 (1987-07-01) * page 3, line 32 - line 50 * * page 4, line 2 - line 24 * ----- | 1,4-7, 12,13 | INV. B32B17/10 C03C27/12 C08K3/36 C08L29/14 |
| D,A | DE 197 56 274 A1 (HUELS TROISDORF [DE]) 24 June 1999 (1999-06-24) * page 2, line 14 - line 59 * * page 4, line 26 - line 44; table 3 * ----- | 1-9,12, 13 | ADD. C09C1/30 |
| A | US 5 307 438 A (BILKADI ZAYN [US] ET AL) 26 April 1994 (1994-04-26) * column 8, line 50 - column 9, line 44 * ----- | 1,2 | |
| D,A | US 2 467 342 A (SEYMOUR RAYMOND B) 12 April 1949 (1949-04-12) * column 2, line 43 - column 4, line 26; example 1 * ----- | 1,2 | |
| A | US 3 202 568 A (CLEMENT COTTET EMILE ET AL) 24 August 1965 (1965-08-24) * column 1, line 45 - column 2, line 7; claims * ----- | 1 | |
| A | US 2 317 891 A (DENNISON BROOK J) 27 April 1943 (1943-04-27) * column 3, line 53 - column 4, line 4; claims * ----- | 1 | TECHNICAL FIELDS SEARCHED (IPC) B32B C08K C09C |
| A | US 4 164 602 A (FABEL DAVID A [US]) 14 August 1979 (1979-08-14) * column 3, line 1 - column 5, line 35; claims * ----- | 1 | |
| A | EP 0 928 818 A2 (DOW CORNING [US]) 14 July 1999 (1999-07-14) * paragraph [0021]; claims; examples * ----- | 1-3 | |

The present search report has been drawn up for all claims

| Place of search | Date of completion of the search | Examiner |
|---|---|---|
| Munich | 11 September 2007 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 5694

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2007

| Patent document cited in search report | | Publication date | Patent family member(s) | | Publication date |
|---|---|---|---|---|---|
| EP 0227633 | A2 | 01-07-1987 | AU | 588657 B2 | 21-09-1989 |
| | | | AU | 6684786 A | 25-06-1987 |
| | | | CA | 1285673 C | 02-07-1991 |
| | | | CS | 8609769 A2 | 12-07-1990 |
| | | | DE | 3684266 D1 | 16-04-1992 |
| | | | ES | 2031076 T3 | 01-12-1992 |
| | | | GR | 3004044 T3 | 31-03-1993 |
| | | | IN | 168645 A1 | 11-05-1991 |
| | | | JP | 62158037 A | 14-07-1987 |
| | | | MX | 163463 B | 18-05-1992 |
| | | | US | 4681810 A | 21-07-1987 |
| | | | ZA | 8609633 A | 30-09-1987 |
| DE 19756274 | A1 | 24-06-1999 | BR | 9813742 A | 10-10-2000 |
| | | | CN | 1284911 A | 21-02-2001 |
| | | | WO | 9932283 A1 | 01-07-1999 |
| | | | EP | 1042121 A1 | 11-10-2000 |
| | | | ES | 2210859 T3 | 01-07-2004 |
| | | | JP | 2001526165 T | 18-12-2001 |
| US 5307438 | A | 26-04-1994 | CA | 2101494 A1 | 14-02-1994 |
| | | | DE | 69326732 D1 | 18-11-1999 |
| | | | DE | 69326732 T2 | 08-06-2000 |
| | | | EP | 0586276 A2 | 09-03-1994 |
| | | | ES | 2137237 T3 | 16-12-1999 |
| | | | JP | 7003162 A | 06-01-1995 |
| | | | MX | 9304816 A1 | 28-02-1994 |
| US 2467342 | A | 12-04-1949 | NONE | | |
| US 3202568 | A | 24-08-1965 | CH | 391200 A | 30-04-1965 |
| | | | DE | 1174458 B | 23-07-1964 |
| | | | FR | 1260751 A | 12-05-1961 |
| | | | GB | 920233 A | 06-03-1963 |
| | | | NL | 262593 A | |
| US 2317891 | A | 27-04-1943 | NONE | | |
| US 4164602 | A | 14-08-1979 | CA | 1102946 A1 | 09-06-1981 |
| | | | DE | 2861458 D1 | 11-02-1982 |
| | | | EP | 0001502 A1 | 18-04-1979 |
| | | | IT | 1099773 B | 28-09-1985 |
| | | | JP | 54066936 A | 29-05-1979 |
| | | | MX | 148185 A | 24-03-1983 |
| EP 0928818 | A2 | 14-07-1999 | DE | 69922557 D1 | 20-01-2005 |

EPO FORM P0459

For more details about this annex : see Official Journal of the European Patent Office, No. 12/82

**EP 1 977 886 A1**

## ANNEX TO THE EUROPEAN SEARCH REPORT
## ON EUROPEAN PATENT APPLICATION NO.

EP 07 10 5694

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2007

| Patent document cited in search report | Publication date | Patent family member(s) | | Publication date |
|---|---|---|---|---|
| EP 0928818 A2 | | DE 69922557 T2 | | 15-12-2005 |
| | | JP 11246210 A | | 14-09-1999 |
| | | US 5919298 A | | 06-07-1999 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2467342 A
- EP 0227633 A
- EP 1042121 A
- JP 11060290 A
- DE 10143109

- WO 0240578 A1
- DE 102004043907 A1
- EP 0185863 B1
- WO 03097347 A1
- WO 0143963 A1